# EUROPEAN PATENT APPLICATION

(11) **EP 4 699 499 A1**
(43) Date of publication of application: **25.02.2026**
(21) Application number: 24792200.8
(22) Date of filing: 17.04.2024
(51) Int. Cl.: A47J 42/18, A47J 42/12, A47J 42/08, A47J 42/02

(54) **SYSTEM FOR THE ASSISTED SETTING OF THE GRINDING POINT IN COFFEE GRINDERS**

(30) Priority: 21.04.2023 ES 202330315
(71) Applicant: Markibar Innovacion, S.L., 31191 Esquiroz (Navarra) (ES)
(72) Inventor: MARKOTEGI GOÑI, Jose Angel, 31191 Esquiroz (Navarra9 (ES)
(86) International application number: PCT/ES2024/070233
(87) International publication number: WO 2024/218423

(57) **Abstract**

The invention relates to a system for the assisted setting of the grinding point in coffee grinders, which includes a ring gear (11) on a handle (3), for adjusting the grinding setting, there being defined in the ring gear (11) two concentric rows of teeth (16, 16') in opposite directions in which respective mechanisms operate for locking in one rotation direction (G-F) or the other by means of ratchets, the mechanisms being selectively releasable by means of a two buttons, a coarse-grind button (9) and a fine-grind button (10). The mechanism remains locked as long as these buttons is not pressed, thereby preventing accidental misalignment, such that in order to move the handle to fine, the fine-grind button (10) must be pressed, preventing the handle from rotating in the opposite direction. Likewise, to move the handle to coarse, the coarse-grind button (9) must be pressed, preventing the handle from rotating in the opposite direction.

## Description

### FIELD OF THE TECHNIQUE

The present invention relates to a system for the assisted setting of the grinding point in coffee grinders, avoiding modification errors.

The field of the technique for which this device was designed corresponds to that of machinery for professional hospitality (HORECA sector: hotels, restaurants and cafeterias), intended for preparing expresso coffee.

### OBJECT OF THE INVENTION

The object of the invention is to provide a highly secure system for assisted setting of the grinding point, that prevents erroneous or unintentional activation of the adjustment system.

### BACKGROUND TO THE INVENTION

Currently, in the hospitality sector, espresso coffee is basically produced using manual coffee machines, which have scoop or portafilter holders, usually referred to as 'porta', operated manually by the waiter, into which the ground coffee is loaded. The waiter or person-in-charge of serving the coffee places the portafilter in the grinder to receive the corresponding dose of ground coffee. They then press it to compact and homogenise the dose. Finally, they position the portafilter in the coffee machine to extract the coffee by passing pressurised water through the contents of the scoop.

In any kind of grinder, to get a good cup of coffee it is necessary to control two parameters: the dose of coffee and the grind point. Here we analyse how to obtain the dose of coffee in the different kinds of grinders in the market:
On the one hand, there are the traditional volume-dosing coffee grinders. These grinders have a ground coffee container that fills certain sections by gravity, so that the dose is measured by levelling off a specific volume. These grinders are very fast, but the coffee dose is not freshly ground. They also have the advantage of stability of the dose supplied, which only depends on the volume of coffee delivered.

In contrast, there are on-demand grinders that control coffee doses on a timed basis. These grinders have the advantage of always supplying freshly ground coffee, as the coffee is ground when the barista requests a dose. Conversely, it is a slow type of grinder, as you have to wait for the dose to be ground.

Another type of grinder is that described in the utility model ES1068358U, owned by the current applicant MARKIBAR INNOVACION, S.L., which describes a grinder with timed dosing but capable of storing the dose for one or two shots of espresso in a dispenser so that the coffee is delivered immediately. This offers the advantages of the previous grinders: freshly ground coffee and speed of operation. The only problem with this grinder is that the stability of the dose is not as good as with traditional grinders, because, as it is ground in a timed manner, any change in the conditions of the coffee or the grinder can affect the flow of ground coffee and therefore the dose.

Finally, there are grinders such as those described in patent EP3424379B1, owned by the current applicant MARKIBAR INNOVACION, S.L., which describe an automatic coffee grinder capable of dispensing a programmed weight of ground coffee. In this case, the problem described above is eliminated as the dose is a constant number of grams, given that it does not depend on the grams ground in a certain time, but on a dose weighed with a scale.

All these grinders usually have a handle that normally rotates to adjust the gap between the burrs that grind the coffee within an accuracy of a few microns. Normally, the direction for coarse or fine grind is indicated by arrows and an indicative image, but there is always the risk of misinterpreting this image and moving in the opposite direction. In addition, there is always a system for locking the handle to prevent accidental movement during maintenance work or normal use.

In grinders with weight-based dosing, the coffee dose is constant thanks to the dose measurement system, without any of the previously mentioned parameters (change in coffee type, roast level, change in grind point, wear-and-tear of burr, etc.) being affected. The only parameter that may change over time is the fineness of the grind. That is why this invention is best used in this type of grinder with weight-controlled dose, as the grind point is the only parameter to be controlled, its use being so simple that it allows people without a high degree of specialisation to produce perfect coffee over time.

A typical problem in the sector is that when the user of the grinder needs to adjust the grind setting because the coffee is being dispensed too quickly or too slowly, they confuse the direction of the adjustment handle, resulting in a worsening of the problem. So, if the coffee comes out too slowly, the user should adjust the setting to a coarser grind. If, when operating the handle, the user confuses the direction of rotation, the result is an even finer setting and, therefore, after a few coffees, the outflow will be even slower.

### DESCRIPTION OF THE INVENTION

To achieve the proposed objective of this patent, a system is designed with the following characteristics.

The grinder has a grinding-point handle that turns on a fine thread to which a grinding burr is attached. This way, when the handle is turned in a certain direction, the grinding burrs separate, producing a coarser grind. Conversely, turning the handle in the opposite direction brings the burrs together, producing a finer grind.

According to another feature of the invention, a component is connected to the handle which has two rows of concentric teeth with irreversible ratchet-type serrations. The serration direction of the inner row of teeth is the opposite to that of the outer row.

On the other hand, there is a component consisting of two buttons which are used to press two triggers, each with opposite direction and which, once mounted on the grinder, coincide with the serrated areas of the ratchet.

To operate the handle, one of the buttons must be pressed, which enables a determined direction of rotation. Conversely, when the activating buttons of the handle are not pressed, the handle remains locked.

When the handle is moved, the non-activated trigger skips over the teeth of the ratchet, registering each tooth with an audible click.

When the button is released, the handle locks back into the new grinding position, preventing the handle from moving accidentally when cleaning the grinder. For technical service work it is also envisaged that if both buttons are pressed at the same time, the two triggers are concealed and the handle can be turned freely without damaging the triggers or the teeth.

A variant of the invention provides for the placement of a display, which may be retro-illuminated, or of another type, with icons similar to those on each of the two buttons, allowing the corresponding symbol to be highlighted by retro-illumination, suggesting, if necessary, the recommended grind point setting.

A second variant of the invention aims to increase the number of clicks per turn of the handle so that the burrs move with greater precision. This variant is designed so that each of the buttons that determine the direction of rotation of the handle, when pressed, preferably activates two identical triggers aligned in the same position but separate from each other (n +½ steps/teeth). So, when a button is pressed and the handle is activated in the direction indicated by that button, the two unpressed triggers skip over the teeth of the ratchet ring gear alternately, doubling the clicks and locking positions in the rotation of the handle. This way, the precision of each click of the handle is increased, as the burrs move closer together or further apart half the distance.

### DESCRIPTION OF THE DRAWINGS

To complement the description below and with the aim of providing a better understanding of the characteristics of the invention, in accordance with a preferred example of its practical embodiment, a set of drawings is included as an integral part of said description, for illustrative and non-limiting purposes:

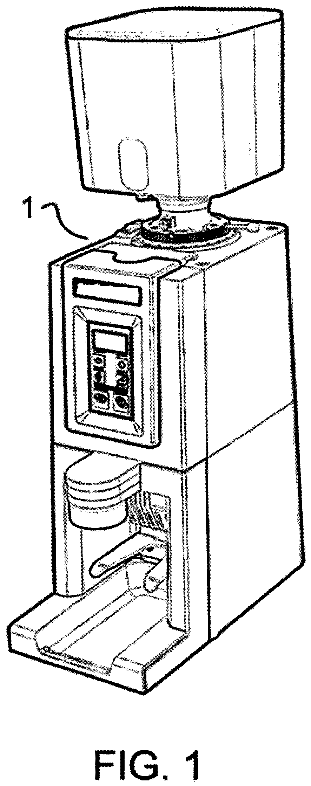

Figures 1 and 2 show perspective views of a coffee grinder, the upper part of which incorporates the grind-point adjustment handle and the two buttons connected to it, all of which is made in accordance with the object of the present invention.
Figures 3A and 3B show the ratchet mechanism in two versions.
Figure 4 shows a section in which the adjustment handle can be seen with its connected parts (handle, handle threading, grinding burrs and ratchet ring gear) and the buttons and trigger assembly.
Figure 5 shows the ratchet ring gear and the set of buttons and triggers separately.
Figure 6 shows a close-up of the button assembly with the triggers and return springs.
Figures 7 and 8 show the ratchet ring gear and triggers separately.
Figure 9 shows a backlit display with symbols representing a recommendation to modify the grind point.
Figure 10 shows a close-up of the button assembly with two triggers for each button.
Figure 11 shows a close-up of the four triggers and their position in relation to the ratchet ring gear.

### PREFERENTIAL EMBODIMENT OF THE INVENTION

In view of the figures outlined above, it can be seen how the device of the invention is embodied in a coffee grinder (1), intended to work in conjunction with a traditional coffee maker with a portafilter not shown in the drawings.

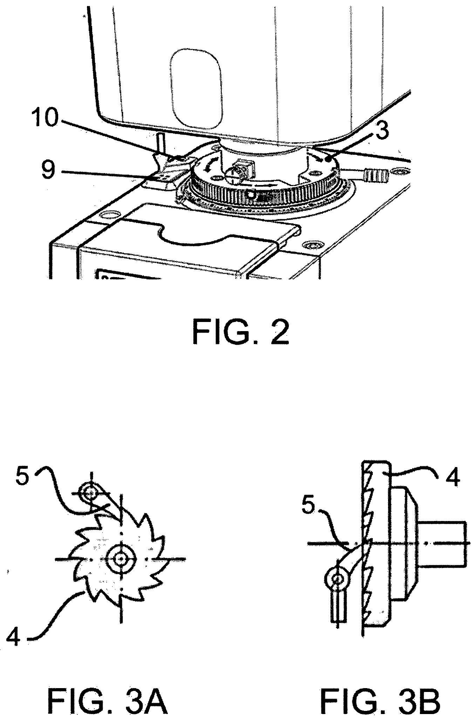

According to Figure 2, in the upper part of this grinder there is a rotating handle (3) that allows the grind-point of the equipment to be adjusted. Next to it there are two buttons (9-10) with indications representing 'FINE' and 'COARSE' which release the handle for movement only when these buttons are pressed.

The proposed system uses two irreversible ratchet mechanisms, as shown in Figures 3A and 3B. The figures show a front-engaging rotating ratchet (Figure 3A) and a side-engaging ratchet (Figure 3B).

In this type of mechanism, the component whose rotation we want to lock or release has a toothed area (4) called 'ratchet' and an external component called "trigger" or 'pawl' (5) that presses on the ratchet with a spring or similar device, and that can be disengaged from the teeth using some type of mechanism.

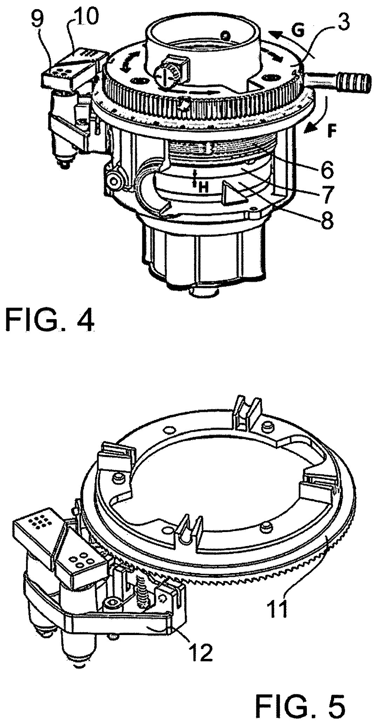

The grinder has a grind-point handle (3) that rotates on a fine-pitch thread (6), to which a grinding burr (7) is connected, as can be seen in Figure 4.

Facing this burr is a second burr (8), similar to the first and connected to the shaft of a motor which, when rotating, grinds the coffee. The distance (H) between the two burrs determines the grind-point we want to set.

As is conventional, turning the handle in the (G) direction separates the grinding burrs, producing a coarser grind. Conversely, turning the handle in the (F) direction brings the burrs together, producing a finer grind.

According to the invention, the grinder has two buttons, one for coarse grind (9) and the other for fine grind (10), which must be pressed in order to be able to turn the handle (3), which means this handle (3) is locked while the buttons to activate it are not pressed.

Therefore, when the coarse-grind button (9) is pressed, the handle can only be turned in the G direction, while the F direction remains locked. If, on the other hand, the fine-grind button (10) is pressed, the handle can only be turned in the F direction, while the G direction remains locked.

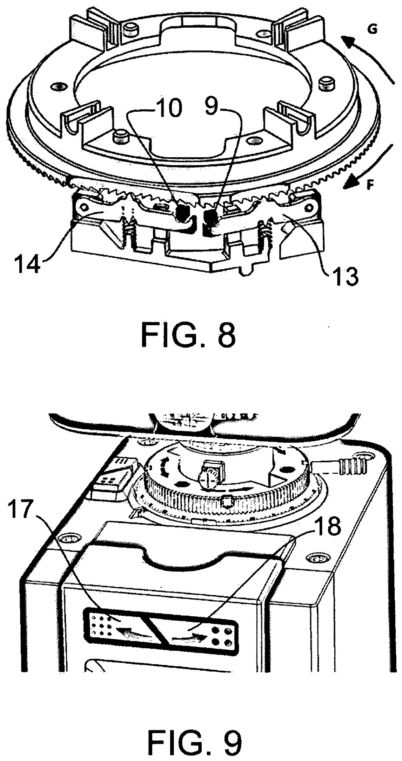

In the present invention, connected to the handle (3) is a ring gear (11) with teeth to function as a ratchet mechanism, as shown in Figures 5 to 8.

On the other hand, there is a bar (12) within which the two buttons are integrated which can activate two triggers with opposing directions and which, once mounted on the grinder, coincide with the serrated areas of the ring gear (11).

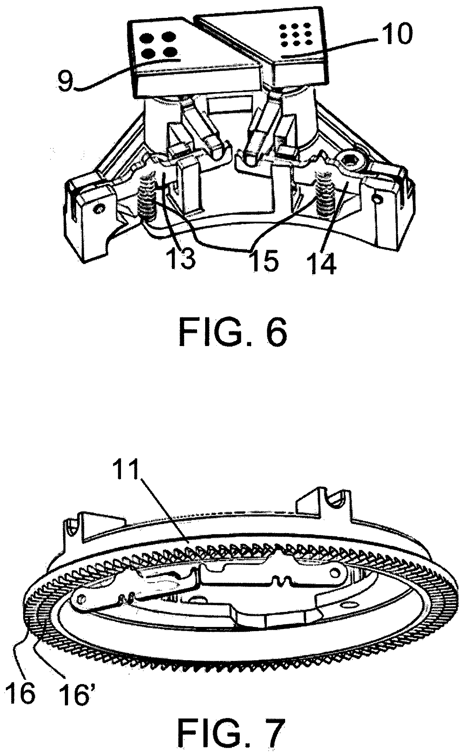

According to Figure 6, the coarse grind (9) and fine grind (10) buttons activate respective triggers (13-14) against the tension of respective springs (15), triggers which act as ratchets on the ring gear (11), releasing its movement in one direction or the other. When the button is no longer pressed, the springs (15) return the buttons to their original position, once again locking the ratchet.

According to Figure 7, the ratchet ring gear (11) has two rows of concentric teeth carved on the underside facing in opposite directions (16 and 16'). The outer row (16) has irreversible ratchet teeth, so that when the coarse-grind button (9) is pressed, trigger (13) separates from the outer ratchet, allowing the handle to turn in the G direction while trigger (14) slips and skips over the teeth (16') of the inner ratchet.

Conversely, the inner row of teeth (16') also has irreversible ratchet-type teeth cut in opposite direction to the previous one, so that when the fine-grind button (10) is pressed, the trigger (14) separates from the outer ratchet, allowing the handle to turn in the F direction while the trigger (13) slips and skips over the teeth of the outer ratchet (16).

When the buttons are not pressed, each trigger locks the turn of the handle in one direction so it cannot move. This prevents the handle from moving accidentally during cleaning or maintenance of the grinder. Conversely, if both buttons are pressed at the same time, both triggers are released and the handle can turn freely without the triggers skipping over the teeth.

When the handle is moved, the trigger which is not pressed skips over the ratchet teeth, making an audible click on each tooth which provides information on the number of grinding points travelled by the handle. This could also be monitored by including an encoder that controls the magnitude of the movements made by the handle (3) and the direction of movement.

A variant of the invention envisages the installation of a display unit (17-18), which may be backlit, with symbols and colours similar to each of the two buttons. In a preferred embodiment of the invention, if the grinder is capable of detecting a misalignment in the grind point, it could suggest modifying it.

Thus, if it is detected that the grind setting needs to be adjusted to fine, the left side (17) of the display will flash intermittently until the handle is adjusted. Conversely, if the grinder detects that a coarse adjustment is required, the right side (18) of the display will flash in the same manner.

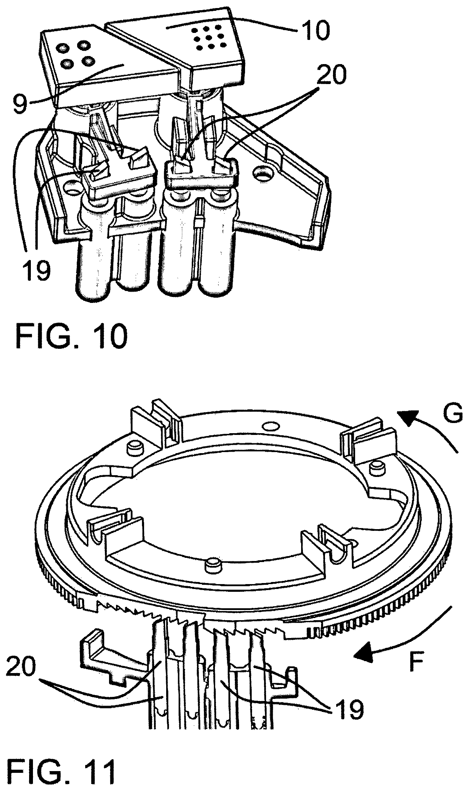

A second variant of the invention envisages that the set of buttons shown in Figure 10 has two pushbuttons, a coarse-grind button (9) and a fine-grind button (10), which when pressed activate two triggers each, coarse button triggers (19) and fine button triggers (20), disengaging the triggers from the ratchet of the ring gear and releasing its movement in the corresponding direction. When the button is no longer pressed, the triggers return to their position, propelled by springs located under the triggers, once again locking the ratchet.

As can be seen in Figure 7, the ratchet ring gear (11) has two rows of concentric teeth carved on the underside, facing in opposite directions (16 and 16'). The outer row (16) has irreversible ratchet teeth, so when the coarse-grind button (9) is pressed, the triggers (19) separate from the outer toothed ring gear, allowing the handle to turn in the G direction while the triggers (20) slip and skip over the teeth (16') of the inner ratchet.

Conversely, the inner row of teeth (16') also has irreversible ratchet-type teeth opposite to the previous one, so when the fine-grind button (10) is pressed, the triggers (20) separate from the inner toothed ring gear, allowing the handle to turn in the F direction while the triggers (19) slip and skip over the teeth of the outer ratchet (16).

As can be seen in Figure 11, the two triggers (19 and 20) are separate from each other by n+½ steps/teeth, so when the handle is turned by an angle equivalent to one tooth, two clicks are produced instead of one, increasing the precision of the system.

When the buttons are not pressed, the triggers closest to the vertical face of the tooth lock the rotation of the handle in one direction and consequently the handle cannot move. This prevents the handle from moving accidentally during cleaning or maintenance of the grinder. Conversely, if both buttons are pressed at the same time, the four triggers are released and the handle can turn freely without the triggers skipping over the teeth.

When moving the handle, the trigger which is not pressed, skips over the teeth of the ratchet, marking each skip with an audible click, which provides information on the number of grinding points travelled by the handle.

## Claims

1. System for the assisted setting of the grinding point in coffee grinders of the type that include a handle (3) to regulate the grind point, which rotates on a fine-pitch thread (6), to which a grinding burr (7) is connected, facing a second burr (8), which is connected to the shaft of a motor that, when rotated, grinds the coffee, allowing the separation (H) between the two burrs to be adjusted to determine the grind point to be set depending on the direction of rotation (G-F). It is **characterised in that** the handle (3) is attached to a ring gear (11) on which two rows of concentric teeth facing opposite directions (16 and 16') are defined, interacting with respective locking mechanisms in both directions of rotation (G-F) by means of ratchets, which can be released selectively by means of two buttons, one for coarse grind (9) and the other for fine grind (10).

2. System for the assisted setting of the grinding point in coffee grinders, according to claim 1, **characterised in that** the coarse grind (9) and fine grind (10) buttons are positioned on a support (12), the buttons can be pressed to activate respective triggers (13-14) against the tension of respective springs (15), triggers which act as ratchets on the ring gear (11), engaging respectively in the concentric rows of teeth facing opposite directions (16 and 16').

3. System for the assisted setting of the grinding point in coffee grinders, according to claim 1, **characterised in that** the system includes means for detecting misalignments in the grind point, as well as a display (17-18) with means for indicating the button to press in order to correctly readjust the grind point.

4. System for the assisted setting of the grinding point in coffee grinders, according to claim 3, **characterised in that** the display (17-18) is backlit.

5. System for the assisted setting of the grinding point in coffee grinders, according to claims 1 to 4, **characterised in that** it includes an encoder as a means of monitoring the magnitude of the movements made on the handle (3) and the direction of movement of said handle.

6. System for the assisted setting of the grinding point in coffee grinders, according to claim 1, **characterised in that** each of the buttons that determine the direction of rotation of the handle are connected to two identical triggers oriented in the same position but separated from each other by n+½ steps/teeth, so that when a button is pressed and the handle is operated in the direction indicated by that button, the two unpressed triggers alternately skip over the teeth of the ratchet ring gear, doubling the clicks and locking positions in the rotation of the handle.
